# EUROPÄISCHE PATENTANMELDUNG

(11) **EP 2 455 264 A2**
(43) Veröffentlichungstag der Anmeldung: **23.05.2012**
(21) Anmeldenummer: 11182604.6
(22) Anmeldetag: 23.09.2011
(51) Int. Cl.: B60S 1/34

(54) **Prüfeinrichtung für eine Antriebseinrichtung einer Scheibenwischvorrichtung**

(30) Priorität: 18.11.2010 DE 102010044096
(71) Anmelder: Robert Bosch GmbH, 70442 Stuttgart (DE)
(72) Erfinder: Kastinger, Guenter, 76571 Gaggenau-Sulzbach (DE)

(57) **Zusammenfassung**

Eine Prüfeinrichtung für eine Antriebseinrichtung (3) einer Scheibenwischvorrichtung (1), welche eine Abtriebswelle (6) aufweist, die einen gerändelten Verbindungsabschnitt (12) zur drehfesten Kopplung mit einem Übertragungsbauteil aufweist, umfasst ein Mitnehmerbauteil (13), das auf den gerändelten Verbindungsabschnitt (12) aufsetzbar ist. Zwischen dem gerändelten Verbindungsabschnitt (12) und dem Mitnehmerbauteil (13) ist ein Adapterbeil (16) eingesetzt.

## Beschreibung

Die Erfindung bezieht sich auf eine Prüfeinrichtung für eine Antriebseinrichtung einer Scheibenwischvorrichtung.

### Stand der Technik

Scheibenwischvorrichtungen, die in Kraftfahrzeugen zum Wischen der Front- bzw. Heckscheibe eingesetzt werden, weisen eine Antriebseinrichtung zum Antrieb eines Wischarms auf, das Träger eines auf der zu reinigenden Scheibe aufliegenden Wischblattes ist. Die Antriebseinrichtung umfasst einen elektrischen Antriebsmotor und ein nachgeschaltetes Getriebe, welches eine Abtriebswelle in eine Drehpendelbewegung versetzt, wobei die Abtriebswelle mit dem Wischarm verbunden ist.

Derartige Antriebseinrichtungen werden bei der Montage einer Leistungsprüfung unterzogen, indem anstelle eines Wischarms eine Prüfeinrichtung mit der Abtriebswelle verbunden wird, um das erzeugbare Drehmoment zu messen. Hierbei ist darauf zu achten, dass die Abtriebswelle durch die Verbindung mit der Prüfeinrichtung nicht beschädigt wird.

### Offenbarung der Erfindung

Der Erfindung liegt die Aufgabe zugrunde, die Funktionstüchtigkeit einer Antriebseinrichtung für eine Scheibenwischvorrichtung nach der Montage ohne Beschädigung der Abtriebswelle zu überprüfen.

Diese Aufgabe wird erfindungsgemäß mit den Merkmalen des Anspruches 1 gelöst. Die Unteransprüche geben zweckmäßige Weiterbildungen an.

Mittels der Prüfeinrichtung wird die Funktionstüchtigkeit einer Antriebseinrichtung einer Scheibenwischvorrichtung nach Beendigung der Montage der Antriebseinrichtung geprüft. Der Prüfvorgang wird noch vor dem Verbinden einer Abtriebswelle, welche Bestandteil der Antriebseinrichtung ist, mit einem Wischarm der Scheibenwischvorrichtung durchgeführt. Die Prüfeinrichtung wird mechanisch mit der Abtriebswelle verbunden, indem ein Mitnehmerbauteil der Prüfeinrichtung auf die Abtriebswelle aufgesetzt und drehfest mit dieser gekoppelt wird. Die Abtriebswelle weist einen gerändelten Verbindungsabschnitt auf, der bei fertig montierter Scheibenwischvorrichtung mit dem Wischarm verbunden ist, wobei aufgrund der Rändelung des Verbindungsabschnittes eine höhere und dauerhaft sichere Drehverbindung und damit einhergehende Drehmomentübertragung gegeben ist. Auf diesen gerändelten Verbindungsabschnitt wird auch das Mitnehmerbauteil der Prüfeinrichtung aufgesetzt, um die mechanische Verbindung zwischen der Prüfeinrichtung und der Antriebseinrichtung herzustellen.

Um sicherzustellen, dass bei der Durchführung des Prüfvorganges die Rändelung auf der Abtriebswelle nicht beschädigt oder gar zerstört wird, ist gemäß der Erfindung ein Adapterteil zwischen dem gerändelten Verbindungsabschnitt auf der Abtriebswelle und dem Mitnehmerbauteil eingesetzt. Es besteht somit kein unmittelbarer Kontakt zwischen dem Mitnehmerbauteil der Prüfeinrichtung und der Abtriebswelle. Vielmehr erfolgt die Kraft- und Drehmomentübertragung über das zwischenliegende Adapterteil, das hinsichtlich seiner Geometrie und/oder Materialwahl so ausgebildet ist, dass bei den während des Prüfvorgangs auftretenden Kräften und Momenten eine Beschädigung der Rändelung auf der Abtriebswelle zumindest weitgehend ausgeschlossen ist. Damit ist sichergestellt, dass der Prüfvorgang nicht zu einer Schädigung der Rändelung führt und die Rändelung für die Verbindung mit dem Wischarm ohne Funktionseinschränkung zur Verfügung steht.

Gemäß einer vorteilhaften Ausführung ist vorgesehen, dass das Adapterteil zumindest im Bereich seines auf der Rändelung der Abtriebswelle aufliegenden Innenmantels ein weicheres Material aufweist als die Rändelung selbst. Mit dem Aufsetzen des Adapterteils wird der Innenmantel an die Rändelung angepresst, wodurch die Rändelung in den Innenmantel eingedrückt wird. Aufgrund des weicheren Materials ist eine Beschädigung der Rändelung ausgeschlossen. Zugleich kann in Umfangsrichtung ein hohes Drehmoment übertragen werden, da mit dem Eindrücken der Rändelung in den Innenmantel des Adapterteils in Umfangsrichtung ein Formschluss zwischen Abtriebswelle und Adapterteil hergestellt wird.

Zweckmäßigerweise besteht das gesamte Adapterteil aus einem derartigen, weicheren Material als die Rändelung. Grundsätzlich möglich ist aber auch eine Ausführung eines Adapterteils, bei der lediglich der Innenmantel mit weicherem Material versehen ist.

Um das Eindrücken zu erleichtern und den Formschluss in Drehrichtung zu unterstützen, ist das Adapterteil auf seiner Innenseite im Ausgangszustand zweckmäßigerweise glattwandig ausgebildet. Gemäß einer weiteren vorteilhaften Ausführung weist das Adapterteil auch auf seiner Außenseite bzw. seinem Außenmantel ein weicheres Material auf als das aufgesetzte Mitnehmerbauteil, welches insbesondere ebenfalls eine Rändelung aufweist. Somit wird der gleiche Verbindungsmechanismus zwischen dem Außenmantel des Adapterbauteils, der gegebenenfalls auch glattwandig ausgebildet ist, und der Innenseite des Mitnehmerbauteils wirksam wie zwischen dem Innenmantel des Adapterbauteils und der Rändelung auf der Abtriebswelle. Auch die Rändelung auf der Innenseite des Mitnehmerbauteils drückt sich in den im Ausgangszustand glattwandigen Außenmantel des Adapterbauteils ein, wobei einerseits aufgrund des weicheren Materials eine Schädigung der Rändelung am Mitnehmerbauteil vermieden wird und andererseits aufgrund des Eindrückens in Umfangsrichtung ein Formschluss gegeben ist, der eine hohe Drehmomentübertragung erlaubt.

Grundsätzlich können verschiedenartige Materialien für das Adapterbauteil verwendet werden. Gemäß einer zweckmäßigen Ausführung besteht dieses aus einem Kunststoffmaterial.

Zusätzlich oder alternativ zur Verwendung eines Adapterteils aus weicherem Material kann es auch vorteilhaft sein, über ein angepasstes konstruktives Design im Bereich des Innenmantels und/oder Außenmantels des Adapterteils die Gefahr von Beschädigungen der Rändelung sowohl auf Seiten der Abtriebswelle als auch auf Seiten des Mitnehmerbauteils zumindest zu verringern.

Der die Rändelung aufweisende Verbindungsabschnitt an der Abtriebswelle ist vorteilhafterweise konusförmig ausgebildet. Dies erlaubt ein leichtes Aufsetzen und wieder Abziehen sowohl des Adapterteils als auch des Mitnehmerbauteils und zugleich eine drehfeste Verbindung für die Durchführung des Prüfvorganges. Die Rändelung befindet sich auf der Außenseite des konusförmigen Verbindungsabschnittes.

Es kommen grundsätzlich verschiedene Rändelungsarten in Betracht. Möglich ist sowohl eine Rändelung mit Nuten bzw. Schlitzen, die in Achsrichtung verlaufen, als auch beispielsweise ein Rautenmuster oder Ähnliches.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenwischvorrichtung in einem Kraftfahrzeug,
- Fig. 2: einen Schnitt durch eine Antriebseinrichtung der Scheibenwischvorrichtung, mit einer Abtriebswelle, welche im Bereich ihrer Stirnseite mit einem Wischarm zu verbinden ist,
- Fig. 3: in Einzeldarstellung eine Mitnehmermutter, welche Bestandteil einer Prüfeinrichtung zur Durchführung eines Prüfvorgangs der Antriebseinrichtung ist, wobei die Mitnehmermutter auf die Abtriebswelle aufzusetzen ist,
- Fig. 4: Abtriebswelle mit aufgesetzter Mitnehmermutter, wobei zwischen Abtriebswelle und Mitnehmermutter ein Adapterbauteil eingesetzt ist.

In den Figuren sind gleiche Bauteile mit gleichen Bezugszeichen versehen.

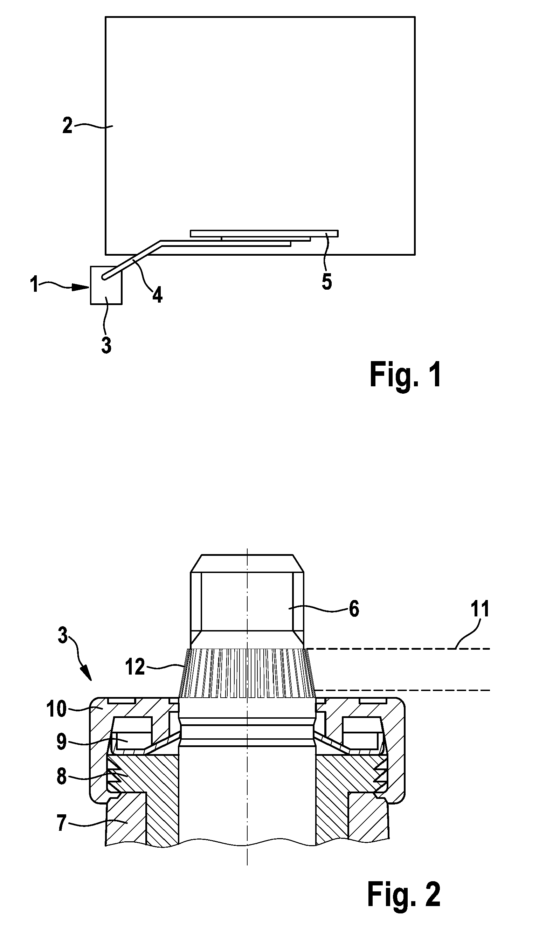

In Fig. 1 ist eine Scheibenwischvorrichtung 1 zum Reinigen einer Fahrzeugscheibe 2 dargestellt. Die Scheibenwischvorrichtung 1 umfasst eine Antriebseinrichtung 3 mit einem elektrischen Antriebsmotor und einem Getriebe zum Antreiben einer Abtriebswelle, an der ein Wischarm 4 mit einem Wischblatt 5 befestigt ist, welches auf der Fahrzeugscheibe 2 aufliegt. Im Betrieb führt der an der Abtriebswelle angeordnete Wischarm 4 eine Drehpendelbewegung aus, welche von der Antriebseinrichtung auf die Abtriebswelle ausgeübt wird. Dementsprechend führt die Abtriebswelle eine reversierende Drehbewegung aus.

Fig. 2 zeigt einen Ausschnitt aus der Antriebsvorrichtung 3 mit der Abtriebswelle 6, die in einem Lagerdom 7 eines Gehäuses der Antriebsvorrichtung drehbar gelagert ist. In den Lagerdom 7 ist eine Lagerbuchse 8, beispielsweise eine Sinterbuchse drehfest eingesetzt, in der sich die Abtriebswelle 6 dreht. An der Lagerbuchse 8 ist stirnseitig eine Klemmscheibe 9 (Speednut) angeordnet, die drehfest mit der Abtriebswelle 6 verbunden ist. Des Weiteren ist eine Dichtkappe 10 stirnseitig auf die Lagerbuchse 8 aufgesetzt, wobei über die Dichtkappe 10 ein unerwünschter Feuchtigkeitseintritt in den Lagerbereich verhindert werden soll. Die Dichtkappe 10 weist einen ersten Dichtabschnitt an der Mantelfläche der Abtriebswelle 6 und einen zweiten Dichtabschnitt am Außenumfang der Lagerbuchse 8 auf.

Drehfest mit der Abtriebswelle 6 ist ein Übertragungsbauteil 11 verbunden, bei dem es sich beispielsweise um eine Motorkurbel handelt, welche Bestandteil des Getriebes im Übertragungsweg zwischen elektrischem Antriebsmotor und Abtriebswelle sein kann. Bei dem Übertragungsbauteil 11 kann es sich aber auch um den Wischarm handeln. Das Übertragungsbauteil 11 ist im Bereich eines Verbindungsabschnittes 12 mit der Abtriebswelle 6 verbunden, wobei der Verbindungsabschnitt 12 einen Teil der Mantelfläche der Abtriebswelle 6 bildet. Der Verbindungsabschnitt 12 ist konusförmig ausgebildet und weist eine Rändelung in Form von Längsrillen auf, welche sich in Achsrichtung erstrecken.

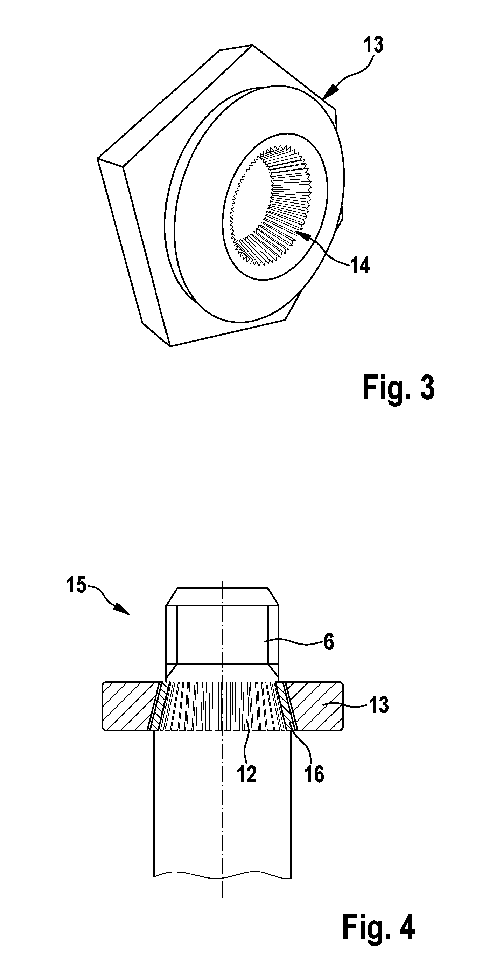

Fig. 3 zeigt eine Mitnehmermutter 13, die Bestandteil einer Prüfeinrichtung für die Antriebseinrichtung 3 ist. Mittels der Prüfeinrichtung wird nach dem Zusammenbau der Antriebseinrichtung eine Leistungsprüfung durchgeführt. Hierfür muss die Prüfeinrichtung mittels der Mitnehmermutter 13 drehfest mit der Abtriebswelle 6 gekoppelt werden. Die Mitnehmermutter 13 ist an der Innenseite konusförmig ausgebildet und mit einer Rändelung versehen, welche mit der Rändelung am Verbindungsabschnitt 12 an der Abtriebswelle 6 korrespondiert. Auch der Konuswinkel der Innenseite 14 der Mitnehmermutter 13 ist an den Konuswinkel des Verbindungsabschnittes 12 an der Abtriebswelle 6 angepasst.

In Fig. 4 ist eine Prüfeinrichtung 15 teilweise dargestellt, mittels der die Leistungsprüfung für die Antriebseinrichtung durchgeführt wird. Bevor das Übertragungsbauteil 11 (Fig. 2) auf die Abtriebswelle 6 aufgesetzt und mit dieser verbunden wird, wird zunächst die Prüfeinrichtung 15 mit der Abtriebswelle 6 verbunden, indem die Mitnehmermutter 13 auf den konusförmigen Verbindungsabschnitt 12 aufgesetzt wird. Bei einer Betätigung des Antriebsmotors kann das über die Abtriebswelle 6 abgegebene Drehmoment mittels der Prüfeinrichtung 15 ermittelt werden.

Zwischen dem konusförmigen, gerändelten Verbindungsabschnitt 12 auf der Abtriebswelle 6 und der ebenfalls konusförmigen Innenseite der Mitnehmermutter 13 ist ein Adapterteil 16 eingesetzt, das die Form einer Konushülse aufweist, wobei der Konuswinkel des Adapterteils 16 an den Konuswinkel des Verbindungsabschnittes 12 angepasst ist. Das Adapterteil 16 soll verhindern, dass durch einen unmittelbaren Kontakt von Verbindungsabschnitt 12 und Mitnehmermutter 13 die Rändelung an beiden Bauteilen beschädigt wird. Um dies zu verhindern, ist das Adapterteil 16 aus einem weicheren Material als die Abtriebswelle 6 und die Mitnehmermutter 13 gefertigt; das Adapterteil 16 besteht insbesondere aus Kunststoff und ist zum Beispiel als Wegwerfteil konzipiert. Die äußere Mantelfläche, welche im eingesetzten Zustand der Innenseite 14 der Mitnehmermutter 13 zugewandt ist und die innere Mantelfläche des Adapterteils, die im eingesetzten Zustand dem Verbindungsabschnitt 12 auf der Abtriebswelle 6 zugewandt ist, sind jeweils glattwandig ausgeführt. Bei der Montage werden das Adapterteil 16 sowie die Mitnehmermutter 13 axial auf den Konussitz aufgepresst, wodurch zugleich eine Radialkraft ausgeübt wird, die bewirkt, dass von außen die Rändelung an der Mitnehmermutter 13 in die Außenseite des Adapterteils und von innen die Rändelung des Verbindungsabschnittes 12 in die Innenseite des Adapterteils eingedrückt wird. Da das Adapterteil aus einem weicheren Material besteht, ist die Gefahr einer Schädigung der gerändelten Oberflächen signifikant reduziert. Durch das Eindrücken der Rändelung in das Material des Adapterteils 16 wird zugleich eine form- und kraftschlüssige Verbindung sowohl zwischen dem Verbindungsabschnitt 12 und dem Adapterteil 16 als auch zwischen dem Adapterteil 16 und der Mitnehmermutter 13 erreicht, so dass die anfallenden Drehmomente zwischen der Abtriebswelle 6 und der Mitnehmermutter 13 übertragen werden können.

Nach durchgeführter Leistungsprüfung kann die Mitnehmermutter 13 axial von der Abtriebswelle 6 entfernt werden, ebenso das Adapterteil 16. Anschließend kann das Übertragungsbauteil 11 über den Verbindungsabschnitt 12 mit der Abtriebswelle 6 drehfest verbunden werden.

## Patentansprüche

1. Prüfeinrichtung für eine Antriebseinrichtung (3) einer Scheibenwischvorrichtung (1), wobei die Antriebseinrichtung (1) eine Abtriebswelle (6) aufweist, die einen gerändelten Verbindungsabschnitt (12) zur drehfesten Kopplung mit einem Bewegungsübertragungsbauteil aufweist, wobei zur Leistungsprüfung ein Mitnehmerbauteil (13) auf den gerändelten Verbindungsabschnitt (12) aufsetzbar ist, wobei zwischen dem gerändelten Verbindungsabschnitt (12) und dem Mitnehmerbauteil (13) ein Adapterteil (16) eingesetzt ist.

2. Prüfeinrichtung nach Anspruch 1, **dadurch gekennzeichnet, dass** das Adapterteil (16) aus einem weicheren Material als der Verbindungsabschnitt (12) besteht.

3. Prüfeinrichtung nach Anspruch 2, **dadurch gekennzeichnet, dass** das Adapterteil (16) auf der Innenseite (14) im Ausgangszustand glattwandig ausgebildet ist.

4. Prüfeinrichtung nach Anspruch 2 oder 3, **dadurch gekennzeichnet, dass** das Adapterteil (16) auf der Außenseite im Ausgangszustand glattwandig ausgebildet ist.

5. Prüfeinrichtung nach einem der Ansprüche 1 bis 4, **dadurch gekennzeichnet, dass** das Adapterteil (16) aus Kunststoff besteht.

6. Prüfeinrichtung nach einem der Ansprüche 1 bis 5, **dadurch gekennzeichnet, dass** der Verbindungsabschnitt (12) und das Adapterteil (16) konusförmig ausgebildet sind.

7. Prüfeinrichtung nach einem der Ansprüche 1 bis 6, **dadurch gekennzeichnet, dass** das Mitnehmerbauteil (13) auf der Innenseite (14) eine Rändelung aufweist.
